Europäisches Patentamt

European Patent Office

Office européen des brevets

(19)

(11) **EP 1 465 429 B1**

(12) **FASCICULE DE BREVET EUROPEEN**

(45) Date de publication et mention
de la délivrance du brevet:
**14.12.2005 Bulletin 2005/50**

(51) Int Cl.⁷: **H04N 7/20**, H04L 27/06

(21) Numéro de dépôt: **04290622.2**

(22) Date de dépôt: **08.03.2004**

(54) **Composant électronique permettant le décodage de signaux de télévision numérique par satellite**

Elektronische Bauteile zur Dekodierung von digitalen Satellitenfernsehsignalen

Electronic component for decoding digital satellite television signals

(84) Etats contractants désignés:
**DE FR GB**

(30) Priorité: **01.04.2003 FR 0304040**

(43) Date de publication de la demande:
**06.10.2004 Bulletin 2004/41**

(73) Titulaire: **STMicroelectronics S.A.**
**92120 Montrouge (FR)**

(72) Inventeurs:
• **Busson, Jean-Pierre**
**38000 Grenoble (FR)**
• **Jouffre, Pierre-Olivier**
**38000 Grenoble (FR)**

• **Louis-Gavet, Bernard**
**38340 Voreppe (FR)**

(74) Mandataire: **Zapalowicz, Francis**
**Bureau D.A. Casalonga-Josse,**
**Paul-Heyse-Strasse 33**
**80336 München (DE)**

(56) Documents cités:
**EP-A- 0 481 543      FR-A- 2 824 986**

• **POULTON K ET AL: "A 4gsample/s 8b ADC in 0.35/spl mu/m CMOS" ISSCC 2002, vol. 1, 2002, pages 166-457, XP010585513**

**Description**

L'invention concerne le décodage de canaux de transmission radiofréquences véhiculant des informations numériques codées.

L'invention s'applique ainsi avantageusement à la télédiffusion numérique par satellite telle que définie dans la spécification européenne DVB-S (Digital Video Broadcasting-satellite) basée sur les normes de transmission MPEG, et utilisant par exemple pour véhiculer les informations, une modulation numérique en quadrature. L'invention concerne ainsi notamment les syntonisateurs (« tuner » en langue anglaise), mais aussi les démodulateurs et le traitement proprement dit de décodage de canal.

Les signaux de télévision en provenance d'un satellite sont amplifiés et convertis dans une bande de fréquences prédéterminée (typiquement 950-2150 MHz) par l'intermédiaire d'une parabole et d'un convertisseur à faible bruit situé au foyer de la parabole.

Ce signal est ensuite envoyé à l'entrée du syntonisateur du récepteur. Le syntonisateur a pour but de sélectionner le canal désiré et de sortir un signal en bande de base sur la voie en phase (voie I) et sur la voie en quadrature (voie Q). Ce signal est ensuite converti en un signal numérique et démodulé. Les traitements de décodage de canal comportent ensuite également un bloc qui distingue, typiquement au moyen d'une logique majoritaire, les zéros des uns, puis effectuent l'ensemble de la correction d'erreur, c'est-à-dire typiquement un décodage de Viterbi, le désentrelacement, un décodage de Reed-Solomon et le débrassage. Le dispositif de décodage de canal fournit en sortie des paquets qui sont décodés de façon classique dans un dispositif de décodage de source conforme aux normes MPEG de façon à redélivrer en sortie les signaux audio et vidéo initiaux transmis via le satellite.

A l'entrée du récepteur, le signal reçu est composé de l'ensemble des canaux émis pour le satellite et transposés dans la bande de fréquence 950-2150 MHz. La puissance globale reçue est sensiblement égale à la puissance moyenne sur un canal augmentée de dix fois le logarithme népérien du nombre des canaux. Ce signal possède une variation importante, de l'ordre de 50 dBm.

Actuellement, dans les récepteurs, le signal reçu en entrée est normalement filtré par un filtre de type large bande (dont la bande passante est de l'ordre de plusieurs centaines de MHz) disposé juste après l'amplificateur d'entrée faible bruit, et ce afin d'éviter la saturation des étages suivants du syntonisateur (notamment les étages d'amplification à gain commandé ainsi que les mélangeurs de l'étage de transposition de fréquence).

Par ailleurs, un premier type de solution prévoit de réaliser à l'extérieur de la puce contenant l'étage d'amplification à gain commandé ainsi que l'étage de transposition de fréquence, l'amplificateur à faible bruit ainsi que les filtres large bande. Ces filtres, dont les fréquences de coupure sont ajustables par la sélection du canal désirée, sont alors réalisés par des composants discrets tels que des diodes « varicap ».

De tels composants présentent toutefois une taille trop importante incompatible avec une réalisation totalement intégrée du syntonisateur.

Par ailleurs, dans ce type de solution, non seulement le syntonisateur n'est pas totalement intégré, mais il est réalisé sur un substrat semiconducteur différent du substrat qui supporte la partie numérique des traitements, à savoir la démodulation et le décodage de canal proprement dit. En d'autres termes, la démodulation et le décodage de canal sont alors réalisés dans un composant distinct de celui intégrant le tuner. Et, le syntonisateur est généralement blindé pour éviter que le bruit généré par la partie numérique ne vienne interférer dans le mélange des signaux de la partie analogique.

Ainsi, dans ce premier type de solution, un dispositif de tête (« Front end » en langue anglaise) incorporé dans un récepteur de signaux de télévision par satellite, et capable d'effectuer la syntonisation, la démodulation et le décodage de canal, comporte plusieurs composants électroniques distincts réalisés sur des puces différentes.

Un autre type de solution a été envisagé et est décrit par exemple dans la demande de brevet français n° 2 804 986. Dans ce deuxième type de solution, il est proposé un composant électronique « Front end » unique, c'est-à-dire réalisé sur une seule puce, et intégrant un syntonisateur radiofréquence, un démodulateur et un décodeur de canal.

Il s'avère aujourd'hui intéressant de pouvoir sortir simultanément du récepteur, plusieurs, c'est-à-dire au moins deux, flux de données MPEG, correspondant respectivement à des canaux différents.

Or, si l'on adopte la première solution matérielle mentionnée ci-dessus, un tel récepteur se composerait alors de plusieurs récepteurs élémentaires identiques, ce qui conduirait à la réalisation d'un grand nombre de puces différentes, de façon à pouvoir incorporer les différents contenants électroniques distincts de chacun des récepteurs élémentaires.

Il s'ensuit alors un surcoût et un encombrement surfacique très important.

Si l'on adopte la deuxième solution évoquée ci-dessus, c'est-à-dire un composant électronique unique, réalisé sur une seule puce, il serait alors nécessaire de réaliser sur cette puce unique, plusieurs syntonisateurs complètement séparés, capables d'être commandés individuellement pour sélectionner les différents canaux désirés destinés à être délivrés simultanément en sortie du récepteur. Mais, le fait de réaliser plusieurs syntonisateurs complètement séparés sur une même puce, conduit alors à des problèmes de couplage entre les différents oscillateurs commandés en tension qui sont destinés à générer les différents signaux de mélange.

Ainsi, actuellement, l'homme du métier, qui souhaite réaliser un récepteur de signaux de télévision numérique par satellite capable de délivrer simultanément plusieurs flux MPEG correspondant à plusieurs canaux différents, se trouve confronté à un choix entre deux solutions non satisfaisantes.

En effet, la première solution conduit à la réalisation de plusieurs récepteurs distincts réalisés sur un nombre important de puces différentes, ce qui est pénalisant d'un point de vue encombrement surfacique et coût.

L'autre solution, plus intéressante d'un point de vue encombrement surfacique, pose des problèmes technologiques de couplage parasite.

L'invention vise à apporter une solution à ce problème.

L'invention propose la réalisation d'un tel récepteur de signaux de télévision numérique par satellite, totalement intégré sur une puce unique, et s'affranchissant des problèmes de couplage parasites évoqués ci-dessus.

L'invention propose donc un composant électronique, comprenant un circuit intégré réalisé sur un substrat monolithique et incorporant un module de syntonisation du type à échantillonnage direct apte à recevoir des signaux analogiques de télévision numérique par satellite composés de plusieurs canaux, ainsi que plusieurs modules numériques de décodage de canal connectés en sortie du module de syntonisation, de façon à délivrer respectivement simultanément plusieurs flux de paquets de données correspondant à plusieurs canaux différents sélectionnés.

En d'autres termes, l'invention prévoit d'utiliser un syntonisateur du type à échantillonnage direct, c'est-à-dire dans lequel la transposition de fréquence et la sélection du canal s'effectuent non pas en analogique, mais directement en numérique, en aval de l'étage de conversion analogique/numérique.

En effet, le fait d'utiliser un syntonisateur à échantillonnage direct pour la réception de signaux de télévision numérique par satellite, conduit à effectuer dans l'étage de conversion analogique/numérique, un sur-échantillonnage des signaux, c'est-à-dire un échantillonnage à une fréquence beaucoup plus élevée de la fréquence de travail habituellement utilisée dans les traitements numériques. Ainsi, ce sur-échantillonnage permet d'obtenir non seulement une résolution de plusieurs bits sur l'ensemble des canaux contenus dans le signal sur-échantillonné, mais également d'extraire le canal désiré avec une résolution multibits, et donc de pouvoir exploiter correctement les informations contenues dans ce canal désiré.

Il devient alors possible de combiner à ce syntonisateur à échantillonnage direct, plusieurs modules numériques de décodage de canal associés aux différents canaux extraits en numérique par le syntonisateur.

En outre, puisque la transposition des signaux avec les différents signaux de mélange correspondant aux différents canaux désirés, s'effectue entièrement en numérique, on s'affranchit par conséquent du problème de couplage parasite entre des oscillateurs commandés en tension.

Généralement, les canaux s'étendent sur une plage de fréquences prédéterminée, et les signaux analogiques véhiculent des informations numériques codées par une modulation numérique.

Ainsi, selon un mode de réalisation de l'invention, le module de syntonisation comporte un étage analogique recevant lesdits signaux analogiques, un étage de conversion analogique/numérique multibits, de préférence supérieure ou égale à 6 bits, ayant une fréquence d'échantillonnage égale au moins au double de ladite plage de fréquences, et plusieurs dispositifs numériques de transposition de fréquences connectés à l'étage de conversion analogique/numérique, et aptes à délivrer simultanément respectivement plusieurs signaux numériques échantillonnés centrés autour de la fréquence nulle et correspondant respectivement à plusieurs canaux sélectionnés.

Par ailleurs, chaque module de décodage de canal comporte un filtre décimateur suivi d'un filtre numérique supplémentaire pour éliminer des informations de canaux adjacents, ainsi qu'un étage de correction d'erreur pour délivrer un flux de paquets de données correspondant aux informations véhiculées par le canal associé au signal numérique échantillonné traité par ce module de décodage de canal.

Selon un mode de réalisation de l'invention, le filtre décimateur est un filtre passe-bas dont la fréquence de coupure est de l'ordre de deux fois la demi-largeur fréquentielle d'un canal. En d'autres termes, ce filtre décimateur a pour but de baisser la fréquence d'échantillonnage de façon à la ramener à une valeur compatible avec les technologies actuelles de circuit numérique, et il permet également un préfiltrage du signal de façon à ne laisser passer environ que deux canaux, dont le canal désiré.

Par ailleurs, la fréquence de coupure du filtre numérique supplémentaire, qui est un filtre de Nyquist, est de l'ordre de la demi-largeur fréquentielle d'un canal, ce filtre numérique supplémentaire étant destiné à éliminer les informations de canaux adjacents.

Selon un mode de réalisation de l'invention, le composant comporte une plaque métallique collée sur la surface arrière du substrat par une colle conductrice, cette plaque métallique étant destinée à être reliée à la masse. Ainsi, la capacité, de valeur relativement élevée, réalisée entre le substrat semiconducteur et la plaque métallique, permet d'absorber les pics de courant à haute fréquence.

Par ailleurs, il est particulièrement avantageux que les éléments effectuant un traitement numérique soient disposés dans une partie du substrat isolée de la partie restante du substrat par une barrière semiconductrice ayant un type de conductivité différent du type de conductivité du substrat. En d'autres termes, on utilise une technologie dite « triple caisson » (« triple well », en langue anglaise). Ceci permet, lorsque la barrière semiconductrice est polarisée par une tension de polarisation différente de celle alimentant les transistors situés dans la partie isolée du substrat, d'éviter que du bruit sur la tension d'alimentation des transistors soit transmis directement via le substrat sur les différents composants analogiques du récepteur.

L'invention a également pour objet un récepteur de signaux de télévision numérique par satellite, comprenant au moins un composant électronique tel que défini ci-avant.

D'autres avantages et caractéristiques de l'invention apparaîtront à l'examen de la description détaillée de modes de réalisation, nullement limitatifs, et des dessins annexés, sur lesquels :

- la figure 1 est un synoptique schématique de la structure interne d'un composant électronique selon l'invention ;
- la figure 2 et la figure 3 illustrent schématiquement des diagrammes fréquentiels de canaux après filtrage ;
- la figure 4 illustre une variante de réalisation d'un composant électronique selon l'invention ; et
- la figure 5 illustre schématiquement une réalisation technologique d'un composant selon l'invention.

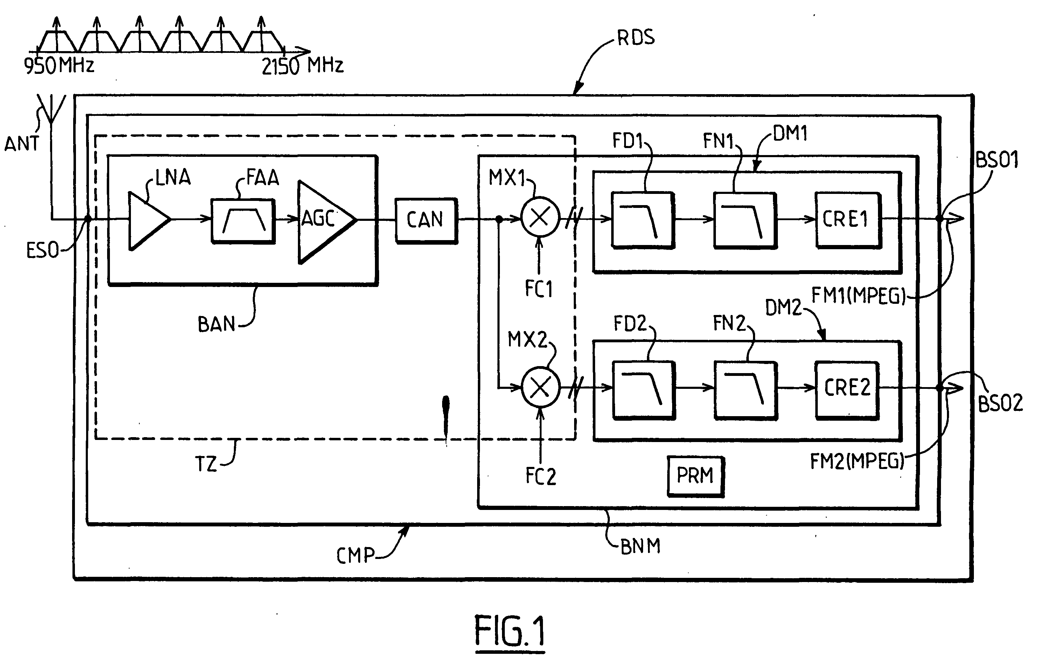

Sur la figure 1, la référence RDS désigne un récepteur/décodeur satellite (« Set-top box », en langue anglaise) connecté à une antenne parabolique ANT captant des signaux de télévision numérique, et destiné à recevoir et à décoder ces signaux.

Ce récepteur RDS comporte en tête un composant électronique CMP destiné à recevoir l'ensemble des canaux $CN_i$ présents dans le signal reçu à l'entrée de signal ESO de ce composant, et à délivrer simultanément et en parallèle, aux sorties BSO1 et BSO2, deux flux FM1 et FM2 de données MPEG. Sur la figure 1, seules deux sorties ont été représentées à des fins de simplification. Ceci étant, l'invention n'est pas limitée à ce nombre de sorties, mais peut en comporter plus que deux.

Ce composant CMP est entièrement réalisé de façon intégrée en technologie CMOS sur un substrat monolithique de silicium. Le circuit intégré sera ensuite encapsulé de façon classique dans un boîtier pour être fixé, par exemple par soudure, sur une carte électronique.

Le composant CMP comporte en tête un dispositif de syntonisation ou « tuner » TZ, destiné à sélectionner plusieurs canaux désirés (ici deux pour des raisons de simplification) parmi l'ensemble des canaux $CN_i$ présents dans le signal reçu à l'entrée de signal ESO, qui est ici également l'entrée du tuner.

Ce tuner TZ est ici un tuner à échantillonnage direct (« direct sampling », selon une dénomination anglo-saxonne bien connue de l'homme du métier).

Plus précisément, le tuner TZ comporte un bloc analogique BAN et une partie numérique formée essentiellement ici de dispositifs de transposition (mélangeurs) numériques MX1 et MX2. La partie analogique et la partie numérique sont séparées par un étage de conversion analogique/numérique CAN.

Le bloc analogique BAN du tuner TZ comporte en tête un amplificateur faible bruit LNA connecté à l'entrée de signal ESO. Cet amplificateur LNA est suivi d'un filtre passe-bande anti-repliement FAA. Les caractéristiques de ce filtre anti-repliement sont choisies de façon à garantir une largeur de bande fréquentielle du signal délivré par l'antenne, qui soit compatible avec une conversion analogique/numérique sans repliement de spectre, effectuée dans l'étage CAN.

Ainsi, si le filtre FAA est choisi de façon à laisser passer toute la bande de signal utile, c'est-à-dire la bande 950 MHz-2150 MHz, ce qui correspond à une largeur de bande de 1,2 GHz environ, alors on choisira un étage de conversion analogique/numérique capable de fonctionner à une fréquence d'échantillonnage au moins égale à 2,5 GHz environ.

A cet égard, on pourra par exemple utiliser un convertisseur analogique/numérique fonctionnant à 4 GHz avec une résolution multibits, tel que celui décrit dans l'article de Ken Poulton et autres, intitulé 4GsSample/s 8b ADC in 0,35 μm CMOS, ISSCC 2002/SESSION 10/HIGH-SPEED ADCs/10.1.

Entre le filtre anti-repliement FAA et l'étage de conversion analogique/numérique, est disposé, de façon classique, un amplificateur à gain commandé AGC dont un exemple de commande du gain sera détaillée ci-après.

La partie numérique du tuner TZ comporte ici deux moyens de transposition MX1-MX2, connectés tous deux à la sortie de l'étage de conversion analogique numérique CAN.

Le premier moyen de transposition MX1 effectue une transposition du signal numérique issu du convertisseur analogique/numérique CAN, en utilisant un signal numérique de transposition ayant la fréquence FC1 correspondant à un premier canal désiré. Matériellement, cette transposition s'effectue de façon numérique par des multiplications classiques du signal par des fonctions sinus et cosinus ayant des pulsations correspondant à la fréquence FC1. Ainsi, on obtient en sortie du premier moyen de transposition MX1, deux voies numériques correspondant aux voies I et Q. Sur chacune des deux voies I et Q, le signal est un signal numérique échantillonné à la fréquence d'échantillonnage du convertisseur analogique/numérique CAN et centré autour de la fréquence zéro.

Le signal numérique est ici sur-échantillonné (fréquence d'échantillonnage de plusieurs GHz), alors que la fréquence d'échantillonnage après filtrage numérique est, comme on le verra ci-après, beaucoup plus basse.

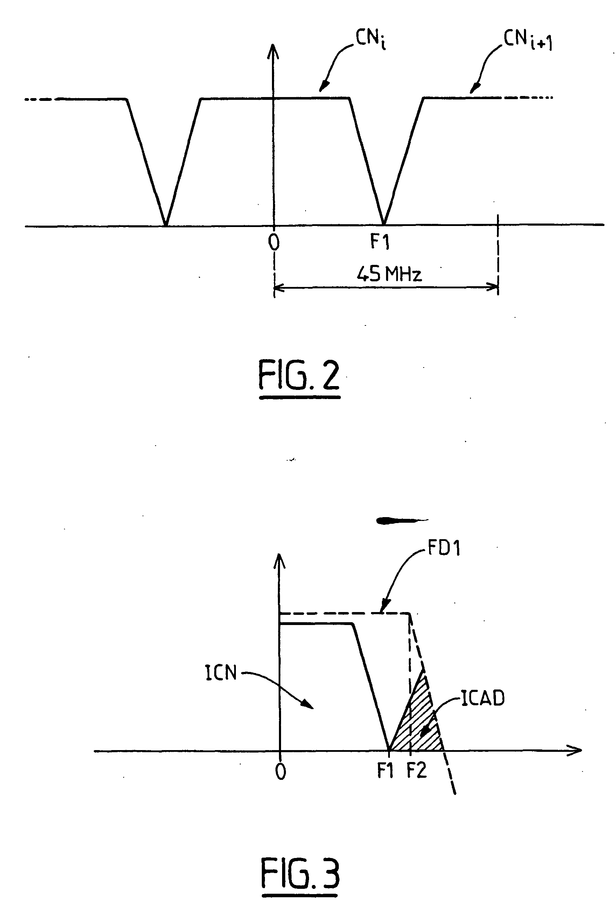

La figure 2 illustre par exemple, et à des fins de simplification, en sortie du moyen de transposition MX1, le canal sélectionné $CN_i$ et le canal immédiatement adjacent $CN_{1+1}$. Bien entendu, alors que sur la figure 2, le signal représenté pour des raisons de simplification et de clarté, est analogique, il est bien entendu en fait numérique, c'est-à-dire formé d'échantillons.

Sur la figure 2, la fréquence F1, égale à 30 MHz, représente la demi-largeur fréquentielle du canal $CN_i$. L'homme du métier sait que cette demi-largeur fréquentielle correspond en fait à la demi-largeur fréquentielle théorique d'un canal (par exemple 22,5 MHz) multipliée par un coefficient connu sous la dénomination anglo-saxonne de « roll off », et qui est par exemple égal à 1,35.

Les mêmes opérations sont effectuées dans le moyen de transposition MX2, avec un signal de transposition à la fréquence FC2 correspondant à un deuxième canal désiré.

On voit donc qu'à la sortie des moyens de transposition MX1 et MX2, on récupère toute la puissance du signal, c'est-à-dire non seulement le canal désiré, mais également tous les autres canaux. Aussi, le fait de sur-échantillonner dans l'étage de conversion analogique/numérique le signal, permet d'obtenir, en sortie des moyens de transposition, un signal sur-échantillonné avec une résolution multi-bits, ce qui va permettre de pouvoir extraire, tout en conservant la résolution multi-bits, le canal désiré, en ne perdant pas d'informations.

Des moyens de traitement PRM délivrent, sur commande, les signaux numériques de transposition ayant les fréquences FC1 et FC2. Par ailleurs, ces moyens numériques de traitement PRM sont également aptes à délivrer le signal de commande de l'amplificateur à gain commandé AGC.

A cet égard, bien que plusieurs solutions existent pour la commande de l'amplificateur AGC, on pourra avantageusement utiliser celle décrite dans la demande brevet français n° 2824986 au nom du Demandeur.

On en rappelle ici les principales caractéristiques.

D'une façon générale, on peut calculer la puissance globale moyenne de l'intégralité du signal reçu par le syntonisateur à partir de tout signal disponible dans le bloc analogique du syntonisateur.

Ceci étant, selon un mode de mise en oeuvre, le calcul de la puissance globale moyenne de l'intégralité du signal reçu est effectué dans le bloc numérique du synthonisateur, c'est-à-dire en aval de l'étage de conversion analogique/numérique. Ce calcul de la puissance globale moyenne comporte alors par exemple un calcul du module du signal échantillonné ainsi qu'une intégration numérique sur un certain nombre d'échantillons, typiquement $2^{21}$. Ceci étant, il serait possible en variante de prévoir un filtre analogique intégrateur dans le bloc analogique destiné à effectuer la moyenne du signal analogique à partir duquel on souhaite calculer la puissance globale moyenne. Puis, le signal de sortie du filtre (tension), représentatif de la puissance moyenne globale du signal reçu, serait alors échantillonné dans l'étage de conversion analogique/numérique. En théorie, il ne serait alors nécessaire d'utiliser qu'un seul échantillon pour effectuer la comparaison avec la valeur de référence. Mais, en pratique, on effectuerait cette comparaison avec une valeur moyenne calculée sur un nombre très limité d'échantillons, par exemple trois ou quatre.

Plus précisément à titre d'exemple, le signal numérique en délivré par le convertisseur analogique numérique est traité dans un bloc de calcul des moyens PRM qui va déterminer la puissance de ce signal en en calculant par exemple le module. Une façon simplifiée de calculer le module du signal dans le bloc de calcul est fournie par la formule ci-dessous :

$$\text{Module (S)} = \text{Max (abs (S))} + 1/2 \text{ Min (abs (S))}$$

Dans cette formule, Max désigne la valeur maximale, Min désigne la valeur minimale et abs désigne la valeur absolue, S le signal délivré par le convertisseur analogique numérique.

La sortie du bloc de calcul est reliée à un soustracteur qui reçoit par ailleurs sur son autre entrée une valeur de référence, stockée par exemple dans un registre ou une mémoire. Cette valeur de référence correspond à une puissance maximale souhaitée en un endroit prédéterminé du bloc analogique.

Chaque échantillon délivré par le bloc de calcul est représentatif en fait de la puissance instantanée du signal reçu à l'entrée de ce bloc. Le soustracteur compare en fait la puissance instantanée de chaque échantillon avec la valeur de référence. Ces valeurs de comparaison successives sont ensuite temporellement intégrées dans un intégrateur à coefficients programmables.

A titre indicatif, l'intégration est effectuée sur une fenêtre glissante de $2^{21}$ échantillons et la sortie de l'intégrateur fournit donc l'écart entre la puissance globale moyenne de l'intégralité du signal reçu et la valeur de référence. Ceci étant, il serait également possible d'effectuer l'intégration en sortie du bloc afin de calculer la puissance moyenne du signal global, puis de soustraire de cette valeur moyenne la valeur de référence. Le soustracteur serait dans ce cas disposé en aval de l'intégrateur.

La sortie de l'intégrateur est ensuite délivrée à des moyens de réglage du gain du bloc BAN. Ces moyens de réglage comportent par exemple une table de référence qui est décodée par la sortie de l'intégrateur et qui va délivrer un mot numérique dont la valeur va permettre de fixer le gain de l'amplificateur AGC.

Aux sorties des deux dispositifs de transposition MX1 et MX2, sont connectés des modules de décodage de canal DM1 et DM2, comportant des moyens classiques de démodulation (non représentés à des fins de simplication) et capables d'effectuer des traitements classiques de démodulation (tels qu'une démodulation QPSK ou 8PSK selon une dénomination bien connue de l'homme du métier), ainsi qu'un étage de correction d'erreur CRE effectuant des traitements classiques de décodage de Viterbi, un désentrelacement, un décodage de Reed-Solomon, un débrassage, de façon à délivrer le flux de paquets FM qui sera décodé dans un bloc de décodage de source externe au composant CMP, conforme à la norme MPEG par exemple.

Chaque module de décodage de canal comporte également en tête un filtre numérique décimateur FD1, qui est un filtre passe-bas dont la fréquence de coupure F2 est par exemple de l'ordre de 40 MHz, ce qui permet de laisser passer non seulement des informations ICN véhiculées par le canal sélectionné, mais également des informations ICAD, dites « de canaux adjacents », et comportant en pratique essentiellement des informations relatives au canal immédiatement adjacent à celui qui est sélectionné (figure 3).

Et, le fait d'avoir sur-échantillonné le signal dans le convertisseur analogique/numérique permet, en sortie du filtre décimateur, d'obtenir un signal filtré échantillonné à une fréquence beaucoup plus basse, par exemple de l'ordre de 150 MHz, mais toujours avec une résolution de plusieurs bits.

Chaque module DMi comporte aussi des moyens de correction (« derotator » en langue anglaise), non représentés ici à des fins de simplification, et aptes à corriger le dérive en fréquence. De tels moyens de « dérotation » peuvent être par exemple ceux décrits dans la demande de brevet européen n° 0 481 543.

Le filtre décimateur FD1 est complété par un filtre de Nyquist effectué dans un filtre numérique FN1, dont la fréquence de coupure est égale à la demi-largeur fréquentielle du canal désiré. Le filtre FN1 complète par conséquent le filtrage effectué par le filtre décimateur et élimine les informations de canaux adjacents.

L'étage de correction d'erreur CRE1 effectue ensuite les traitements classiques de correction d'erreur bien connu de l'homme du métier, sous la dénomination anglo-saxonne de « FEC » (Forward Error Correction).

On obtient donc simultanément sur les deux sorties BSO1 et BSO2 du composant CMP, deux flux de données MPEG correspondant aux deux canaux sélectionnés.

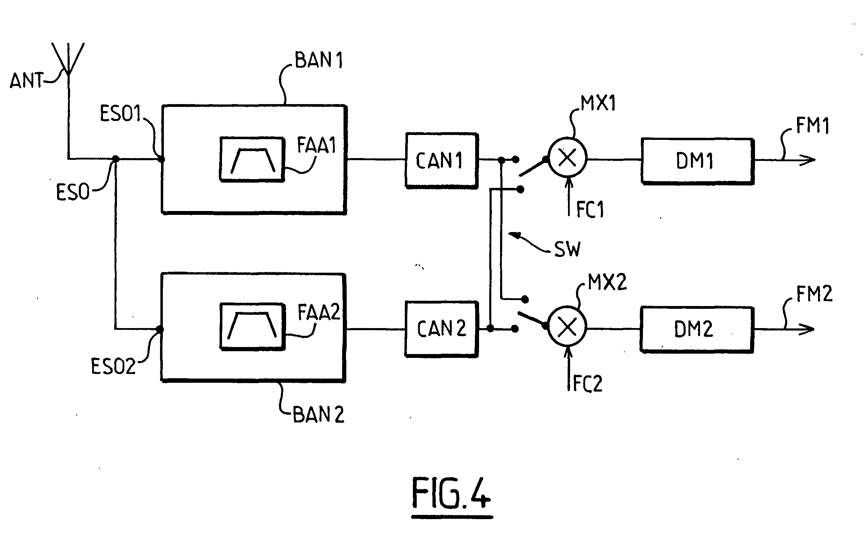

Le mode de réalisation illustré sur la figure 4, permet de relâcher les contraintes sur l'étage de conversion analogique numérique. Plus précisément, si dans certaines applications il est envisagé de n'utiliser que des convertisseurs analogiques/numériques fonctionnant par exemple à 2 GHz, par exemple ceux décrits dans l'article de Xicheng Jiang et autres, intitulé 2GS/s 6b ADC in 0,18 μm CMOS, ISSCC 2003/SESSION 18/NYOUIST A/D CONVERTERS /PAPER 18.3, il est alors nécessaire de subdiviser le bloc analogique BAN en, par exemple, deux blocs analogiques BAN1 et BAN2, reliés tous deux à l'entrée de signal ESO, mais qui diffèrent l'un de l'autre par leur filtre anti-repliement.

Plus précisément, on pourra choisir par exemple pour le filtre FAA1, un filtre passe-bande permettant de sélectionner des canaux compris entre 950 MHz et 1,5 GHz environ, et pour le filtre FAA2, un filtre permettant de sélectionner les canaux entre 1,5 GHz et 2,15 GHz.

Ces deux largeurs de bande sont ainsi compatibles avec la fréquence d'échantillonnage de 2 GHz utilisée dans les convertisseurs analogiques/numériques CAN1 et CAN2.

Les deux dispositifs de transposition MX1 et MX2 sont alors avantageusement reliés aux sorties des deux convertisseurs analogiques/numériques CAN1 et CAN2 par un système de commutation SW commandé par les moyens de traitement PRM.

Ainsi, si les deux canaux désirés correspondant aux deux flux FM1 et FM2, se situent respectivement dans la bande passante du filtre FAA1 et dans la bande passante du filtre FAA2, alors les deux dispositifs de transposition MX1 et MX2 seront effectivement connectés aux deux convertisseurs analogiques/numériques CAN1 et CAN2.

Par contre, si les deux canaux se situent dans la bande passante du filtre FAA1, par exemple, le dispositif de commutation SW sera configuré, de sorte que les deux dispositifs de transposition de fréquence MX1 et MX2 soient reliés tous les deux à la sortie du convertisseur analogique numérique CAN1.

De même, si les deux canaux désirés se situent dans la bande passante du filtre FAA2, le système de commutation SW sera configuré de façon à ce que les deux dispositifs de transposition MX1 et MX2 soient reliés à la sortie du convertisseur analogique/numérique CAN2.

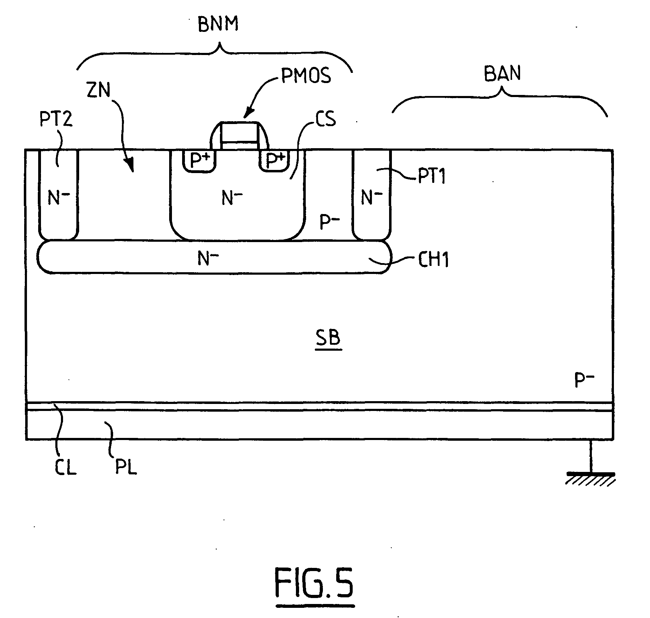

Technologiquement, le composant CMP selon l'invention, est réalisé par exemple en technologie CMOS 0,18 μm, sur un substrat monolithique SB en silicium, par exemple de type P- (figure 5).

Pour absorber les pics de courant à haute fréquence, il est préférable de coller au moyen d'une colle conductrice CL classique, une plaque métallique PL sur la face arrière du substrat SB. Cette plaque métallique est destinée à être reliée à la masse. La fine couche d'oxyde qui se forme naturellement sur le silicium du substrat forme le diélectrique d'un condensateur dont les deux électrodes sont respectivement formées par le substrat SB et la plaque métallique PL. Ce condensateur, dont la valeur capacitive est relativement importante, permet ainsi d'absorber les pics de courant à haute fréquence.

Par ailleurs, la partie numérique du composant CMP, c'est-à-dire en l'espèce le bloc numérique BNM, sont réalisés dans une zone ZN du substrat qui est isolée du reste du substrat (dans laquelle est réalisée la partie analogique BAN du composant) par une barrière semiconductrice dopée N-, formée ici d'une couche enterrée CH1 et de deux puits PT1 et PT2.

Par ailleurs, les transistors PMOS de la partie numérique sont réalisés au sein d'un caisson N- qui vient au contact de la couche enterrée CH1.

Et, afin d'éviter que le bruit sur la tension d'alimentation Vdd ne soit transmis via les caissons N- vers la partie analogique, pour venir directement perturber notamment le filtrage anti-repliement ou bien l'amplificateur LNA, il est avantageux de polariser tous les caissons N- avec une tension de polarisation différente de celle alimentant les transistors situés dans cette zone isolée ZN du substrat.

**Revendications**

1. Composant électronique, comprenant un circuit intégré réalisé sur un substrat monolithique et incorporant un module de syntonisation du type à échantillonnage direct (TZ) apte à recevoir des signaux analogiques de télévision numérique par satellite composés de plusieurs canaux, ainsi que plusieurs modules numériques de décodage de canal (DM1, DM2) connectés en sortie du module de syntonisation de façon à délivrer respectivement simultanément plusieurs flux de paquets de données (FM1, FM2) correspondant à plusieurs canaux différents sélectionnés.

2. Composant selon la revendication 1, **caractérisé par le fait que** les canaux s'étendent sur une plage de fréquences prédéterminées, et les signaux analogiques véhiculent des informations numériques codées par une modulation numérique, **par le fait que** le module de syntonisation (TZ) comporte un étage analogique (BAN) recevant lesdits signaux analogiques, un étage de conversion analogique/numérique multibits (CAN) ayant une fréquence d'échantillonnage égale au moins au double de ladite plage de fréquences, et plusieurs dispositifs numériques de transposition de fréquences (MX1, MX2) connectés à la sortie de l'étage de conversion analogique numérique et aptes à délivrer simultanément respectivement plusieurs signaux numériques échantillonnés centrés autour de la fréquence nulle et correspondant respectivement à plusieurs canaux sélectionnés, et **par le fait que** chaque module de décodage de canal comporte un filtre décimateur (FD1) suivi d'un filtre numérique supplémentaire (FN1) pour éliminer des informations de canaux adjacents et un étage de correction d'erreurs (CRE1) pour délivrer un flux de paquets de données correspondant aux informations véhiculées par le canal associé au signal numérique échantillonné traité par ce module de décodage de canal.

3. Composant selon la revendication 2, **caractérisé par le fait que** la résolution de l'étage de conversion analogique/numérique est supérieure ou égale à 6 bits.

4. Composant selon la revendication 2 ou 3, **caractérisé par le fait que** le filtre décimateur (FD1) est un filtre passe-bas dont la fréquence de coupure est de l'ordre de deux fois la demi-largeur fréquentielle d'un canal, et **par le fait que** la fréquence de coupure du filtre numérique supplémentaire (FN1) est de l'ordre de la demi-largeur fréquentielle d'un canal.

5. Composant selon l'une des revendications précédentes, **caractérisé par le fait qu'**il comporte une plaque métallique (PL) collée sur la face arrière du substrat (SB) par une colle conductrice, et destinée à être reliée à la masse.

6. Composant selon l'une des revendications précédentes, **caractérisé par le fait que** le substrat (SB) a un premier type de conductivité, **par le fait que** les éléments effectuant un traitement numérique sont disposés dans une partie du substrat isolée de la partie restante du substrat par une barrière semiconductrice ayant un deuxième type de conductivité différent du premier type de conductivité, et **par le fait que** ladite barrière semiconductrice est polarisée par une tension de polarisation différente de celle alimentant les transistors situés dans ladite partie isolée du substrat.

7. Récepteur de signaux de télévision numérique par satellite, **caractérisé par le fait qu'**il comprend un composant électronique tel que défini dans l'une des revendications précédentes.

**Patentansprüche**

1. Elektronisches Bauteil mit einer integrierten Schaltung, die auf einem monolithischen Substrat realisiert ist und ein Abstimmungsmodul des Typs mit direkter Abtastung (TZ), das geeignet ist, aus mehreren Kanälen bestehende analoge Signale des digitalen Satellitenfernsehens zu empfangen, sowie mehrere digitale Kanaldekodierungsmodule (DM1,DM2) aufweist, die am Ausgang des Abstimmungsmoduls so angeschlossen sind, um jeweils gleichzeitig mehrere Flüsse von Datenpaketen (FM1,FM2) auszugeben, die mehreren unterschiedlichen gewählten Kanälen entsprechen.

2. Elektronisches Bauteil nach Anspruch 1, **dadurch gekennzeichnet, daß** sich die Kanäle über einen vorgegebenen Frequenzbereich erstrecken und die analogen Signale digitale Informationen, die durch eine digitale Modulation kodiert sind, übertragen, **dadurch**, daß das Abstimmungsmodul (TZ) aufweist: eine analoge Stufe (BAN), die die analogen Signale empfängt, eine Analog/Digital-Mehrbit-Umsetzungsstufe (CAN) mit einer Abtastfrequenz, die mindestens gleich dem Doppelten des Frequenzbereichs ist, und mehrere digitale Frequenzumsetzungsvorrichtungen (MX1,MX2), die mit dem Ausgang der Analog/Digital-Umsetzungsstufe verbunden sind und geeignet sind, gleichzeitig jeweils mehrere digitale abgetastete Signale auszugeben, die um die Frequenz Null zentriert sind und jeweils mehreren gewählten Kanälen entsprechen, und **dadurch**, daß jedes Kanaldekodierungsmodul ein Dezimierungsfilter (FD1) gefolgt von einem zusätzlichen digitalen Filter (FN1), um Informationen von benachbarten Kanälen zu eliminieren, und eine Fehlerkorrekturstufe (CRE1) aufweist, um einen Fluß von Datenpaketen auszugeben, der Informationen entspricht, die auf dem Kanal übertragen werden, der mit dem von diesem Kanaldekodierungsmodul verarbeiteten, abgetasteten digitalen Signal verknüpft ist.

3.  Bauteil nach Anspruch 2, **dadurch gekennzeichnet, daß** die Auflösung der Analog/Digital-Umsetzungsstufe größer öder gleich 6 Bit ist.

4.  Bauteil nach Anspruch 2 oder 3, **dadurch gekennzeichnet, daß** das Dezimierungsfilter (FD1) ein Tiefpaßfilter ist, dessen Grenzfrequenz in der Größenordnung von zwei Mal der halben Frequenzbandbreite eines Kanals ist, und **dadurch**, daß die Grenzfrequenz des zusätzlichen digitalen Filters (FN1) in der Größenordnung der halben Frequenzbandbreite eines Kanals ist.

5.  Bauteil nach einem der vorstehenden Ansprüche, **dadurch gekennzeichnet, daß** es eine Metallplatte (PL) aufweist, die mittels eines leitfähigen Klebstoffs an die hintere Fläche des Substrats (SB) geklebt ist und vorgesehen ist, um an Masse angeschlossen zu werden.

6.  Bauteil nach einem der vorstehenden Ansprüche, **dadurch gekennzeichnet, daß** das Substrat (SB) einen ersten Leitungstyp hat, **dadurch**, daß die Elemente, die eine digitale Verarbeitung ausführen, in einem Teil des Substrats angeordnet sind, der von dem restlichen Teil des Substrat mittels einer Halbleiterbarriere isoliert ist, die einen zweiten Leitungstyp hat, der sich von dem ersten Leitungstyp unterscheidet, und **dadurch**, daß die Halbleiterbarriere mit einer Vorspannung vorgespannt ist, die sich von derjenigen unterscheidet, die die in dem isolierten Teil des Substrats angeordneten Transistoren versorgt.

7.  Empfänger von Signalen des digitalen Satellitenfernsehens, **dadurch gekennzeichnet, daß** er ein elektronisches Bauteil aufweist, wie in einem der vorstehenden Ansprüche definiert ist.

**Claims**

1.  Electronic component, comprising an integrated circuit embodied on a monolithic substrate and incorporating a tuning module of the direct sampling type (TZ) able to receive satellite digital television analogue signals composed of several channels, as well as several channel decoding digital modules (DM1, DM2) connected at the output of the tuning module so as to deliver respectively simultaneously several streams of data packets (FM1, FM2) corresponding to several different selected channels.

2.  Component according to Claim 1, **characterized in that** the channels extend over a predetermined frequency span, and the analogue signals convey digital information coded by digital modulation, **in that** the tuning module (TZ) comprises an analogue stage (BAN) receiving the said analogue signals, a multibit analogue/digital conversion stage (ADC) having a sampling frequency equal to at least twice the said frequency span, and several digital devices for transposing frequencies (MX1, MX2) that are connected to the output of the analogue/digital conversion stage and are able to deliver simultaneously respectively several sampled digital signals centred around the zero frequency and corresponding respectively to several selected channels, and **in that** each channel decoding module comprises a decimator filter (FD1) followed by an additional digital filter (FN1) for eliminating information of adjacent channels and an error correction stage (CRE1) for delivering a stream of data packets corresponding to the information conveyed by the channel associated with the sampled digital signal processed by this channel decoding module.

3.  Component according to Claim 2, **characterized in** the resolution of the analogue/digital conversion stage is greater than or equal to 6 bits.

4.  Component according to Claim 2 or 3, **characterized in that** the decimator filter (FD1) is a low-pass filter whose cutoff frequency is of the order of twice the frequency half-width of a channel, and **in that** the cutoff frequency of the additional digital filter (FN1) is of the order of the frequency half-width of a channel.

5.  Component according to one of the preceding claims, **characterized in that** it comprises a metal plate (PL) glued to the rear face of the substrate (SB) by a conducting glue, and intended to be earthed.

6. Component according to one of the preceding claims, **characterized in that** the substrate (SB) has a first type of conductivity, **in that** the elements performing a digital processing are disposed in a part of the substrate that is insulated from the remaining part of the substrate by a semiconducting barrier having a second type of conductivity different from the first type of conductivity, and **in that** the said semiconducting barrier is biased by a bias voltage different from that supplying the transistors situated in the said insulated part of the substrate.

7. Receiver of satellite digital television signals, **characterized in that** it comprises an electronic component as defined in one of the preceding claims.

FIG.1

FIG. 2

FIG. 3

FIG.4

FIG.5